# EUROPÄISCHE PATENTSCHRIFT

(11) **EP 2 102 063 B1**
(45) Veröffentlichungstag und Bekanntmachung des Hinweises auf die Patenterteilung: **27.07.2011**
(21) Anmeldenummer: 07802695.2
(22) Anmeldetag: 17.08.2007
(51) Int. Cl.: B64F 1/36

(54) **BE- UND ENTLADEN VON FLUGGEPÄCKSTÜCKEN**
LOADING AND UNLOADING ITEMS OF FLIGHT LUGGAGE
CHARGEMENT ET DÉCHARGEMENT DE BAGAGES AÉRIENS

(30) Priorität: 23.08.2006 EP 06119429
(43) Veröffentlichungstag der Anmeldung: 23.09.2009
(73) Patentinhaber: Kratzmaier, Erich, 82547 Eurasburg (DE)
(72) Erfinder: Kratzmaier, Erich, 82547 Eurasburg (DE)
(74) Vertreter: Szynka, Dirk
(86) Internationale Anmeldenummer: PCT/EP2007/058591
(87) Internationale Veröffentlichungsnummer: WO 2008/022977

(56) Entgegenhaltungen:
- EP-A- 0 841 297
- EP-A- 1 072 328
- EP-A- 1 371 940
- EP-A- 1 621 849
- GB-A- 2 242 520
- NL-C2- 1 023 904
- US-A- 5 909 013
- US-A1- 2003 127 792
- ANONYMOUS: "Weight lifter" ABB REVIEW, ABB, ASEA BROWN BOVERI, ZUERICH, CH, 1. März 2002 (2002-03-01), Seiten 25-29, XP002271252 ISSN: 1013-3119

## Beschreibung

Die vorliegende Erfindung bezieht sich auf Verfahren und Vorrichtungen zum Be- und Entladen von Fluggepäckstücken in einem Flughafen.

Bei Flügen, insbesondere Passagierflügen, tritt die Handhabung des einzuladenden oder auszuladenden Gepäcks als wesentliches zeitliches, logistisches und technisches Problem in Erscheinung. Wegen der erheblichen und im Laufe der technischen Entwicklung tendenziell zunehmenden Größe von Flugzeugen einerseits und des Komfortinteresses der Passagiere sowie des betriebswirtschaftlichen Interesses an Zeiteinsparungen andererseits und schließlich auch im Hinblick auf die Notwendigkeit einer fehlerlos durchorganisierten Handhabung einzuladenden und auszuladenden Gepäcks im Hinblick auf Sicherheit und zutreffende Zuweisung werden in diesem Bereich hohe Anforderungen gestellt. Im Wesentlichen kommen maschinelle Anlagen mit Förderbändern zum Transport und menschliche Arbeitskräfte zum Einladen und Entladen zum Einsatz. Es sind sowohl spezielle Fluggepäckbehälter bekannt, die bereits im Gepäckbereich des Flughafens beladen werden und in der beladenen Form als kompletter Behälter in das Flugzeug eingeladen und auch wieder ausgeladen werden, als auch Transportwagen, die lediglich zum Transport des Gepäcks vom Gepäckbereich zum Flugzeug dienen und dort zum Beladen des Flugzeuges wieder entladen werden müssen.

Die Druckschrift "Weight lifter" (ABB Review, ABB, Zürich, 1. März 2002, Seiten 25 bis 29, XP002271252 ISSN: 1013-3119) zeigt einen Gelenkarmroboter, der Gepäckstücke von zwei Gepäckbändem abnimmt und in einer Mehrzahl Gepäckbehälter unterbringt. Der Roboter kann dabei einerseits ortsfest ausgeführt sein und die Enden der Gepäckbänder sowie die Gepäckbehälter dann durch entsprechende Drehstreckbewegungen erreichen. Andererseits kann der Roboter auch über eine bestimmte Wegstrecke auf gerader Bahn verschiebbar gelagert sein, wobei dann endseitig der Bahn jeweils das Ende eines Gepäckbandes zugänglich ist und beidseits der Bahn sechs Gepäckbehälter zur Unterbringung der aufgenommenen Gepäckstücke zur Verfügung stehen.

Der vorliegenden Erfindung liegt das Problem zugrunde, eine besonders vorteilhafte Ausgestaltung eines Verfahrens anzugeben, bei dem ein Roboter von mindestens zwei Transportbändern Gepäckstücke abnimmt und in einen Gepäckbehälter einlädt.

Zum einen richtet sich die Erfindung auf ein Verfahren zum Einladen von Fluggepäckstücken in ein Flugzeug, bei dem die Gepäckstücke mit einer Mehrzahl parallel arbeitender, als Paternosterbänder aufgebauter und mit zwei Bewegungsrichtungen betriebener Transportbänder zu einem Roboter transportiert werden und von dem Roboter von der Mehrzahl Transportbänder in einen Gepäckbehälter eingeladen werden,

aber auch auf eine entsprechende Anlage zum Einladen von Fluggepäckstücken in einen Gepäckbehälter, welche Anlage aufweist eine Mehrzahl parallel arbeitender, als Patemosterbänder aufgebauter und mit zwei Bewegungsrichtungen betreibarer Transportbänder zum Transportieren der Gepäckstücke und einen Roboter zum Einladen der von der Mehrzahl Transportbänder antransportierten Gepäckstücke in den Gepäckbehälter.

Bevorzugte Ausgestaltungen ergeben sich aus den Unteransprüchen und der folgenden Beschreibung. Die Einzelheiten beziehen sich dabei auf alle Aspekte der Erfindung und auf die verschiedenen Anspruchskategorien ohne dass hierzwischen noch im Einzelnen explizit unterschieden wird.

Gemäß der Erfindung wird bei einem Verfahren zum Einladen von Fluggepäckstücken in ein Flugzeug eine Mehrzahl parallel arbeitender Patemosterbänder verwendet. Diese transportieren die Gepäckstücke zu einem Roboter, der zum Einladen in einen Gepäckbehälter dient. Bei dem Gepäckbehälter kann es sich sowohl um einen Gepäckbehälter handeln, der am Flugzeug noch einmal umgeladen wird, etwa einen Wagen, als auch um einen eigentlichen Fluggepäckbehälter, der im durch den Roboter beladenen Zustand in das Flugzeug eingeladen wird und demzufolge auch baulich an das Flugzeug angepasst ist.

Bei dem Roboter kann es sich beispielsweise um einen Gelenkarmroboter mit einem Greifwerkzeug, aber auch um eine andere Bauform, etwa einen Portalroboter handeln. Er ersetzt die bisher verwendete menschliche Arbeitskraft, was zeitliche und ökonomische Vorteile bietet.

Die Mehrzahl Transportbänder sollen parallel arbeiten, also das zu einem bestimmten Flug zugehörige Gepäck auf eine Mehrzahl Bänder verteilt dem Roboter anliefern und anbieten. Damit kann der Roboter entweder zwischen Gepäckstücken auf verschiedenen Bändern auswählen oder die Gepäckstücke auf den verschiedenen Bändern nach bestimmten festgelegten Verfahrensabtäufen abarbeiten. Jedenfalls müssen die Transportbänder den zeitlichen Arbeitstakt des Roboters nicht identisch nachvollziehen. Sie können zudem auch als Pufferspeicher dienen, also größere Mengen Gepäck aufnehmen und zur darauf folgenden "Abarbeitung" zu dem Roboter transportieren.

Vorzugsweise wird die Mehrzahl Transportbänder von einem gemeinsamen Gepäckband aus mit den Gepäckstücken beladen, liefern die Transportbänder also das Gepäck nicht direkt vom Check-in-Schalter zu dem Roboter. Dabei können durchaus auch mehr als ein einziges gemeinsames Gepäckband Verwendung finden, wobei jedoch von jedem dieser Gepäckbänder jeweils mehr als ein Transportband zu dem Roboter beladen werden soll. Ferner können die von einem gemeinsamen Gepäckband belieferten Transportbänder auch mehr als einen Roboter beliefern oder sich auch mit anderen Transportbändern einen Roboter teilen.

Im Sinne der Verteilung des Gepäcks auf die Mehrzahl Transportbänder und der Pufferung wird vorzugsweise über die Sortierung nach Flugnummern hinaus keine weitere Sortierung vorgenommen. Es ist durchaus sinnvoll, eine gewisse Sortierung nach Flugnummern vorzunehmen, also einer zusammengehörigen Zahl von Transportbändern, nicht notwendigerweise allen zu einem gemeinsamen Gepäckband gehörenden Transportbändern, das Gepäck eines bestimmten Fluges zuzuordnen. Der Roboter wird die zu einem Flug gehörenden Gepäckstücke auch einem bestimmten Gepäckbehälter zuführen müssen. Andererseits wird im Sinne einer möglichst großen Flexibilität der zeitlichen Organisation und Pufferung eine Verteilung der Gepäckstücke auf die Transportbänder unabhängig von weiteren Eigenschaften, etwa ihrem Gewicht, ihrer Größe, ihrer Empfindlichkeit oder anderem bevorzugt. Solche Randbedingungen könnten zwar eine Anpassung des Roboters an bestimmte Gepäckstücktypen oder eine anderweitige technische Optimierung des Einladevorgangs ermöglichen, würden jedoch dem von der Erfindung vordringlich angestrebten Ziel der logistischen Optimierung in zeitlicher Hinsicht zuwiderlaufen.

Ferner ist bevorzugt, dass der Roboter die Gepäckstücke von den gerade von ihm zu bedienenden (oder grundsätzlich von ihm zu bedienenden) Transportbändern in einer vorgegebenen zyklischen Reihenfolge abnimmt. "Zyklisch" bedeutet damit nicht notwendigerweise, dass nächste Nachbarn aufeinander folgen. "Zyklisch" bedeutet auch nicht, dass der Roboter nicht bei einem bestimmten Transportband verharren darf, wenn dort gerade mehr als ein Gepäckstück sinnvoll abzunehmen sind, weil sie gerade zum selben Flug gehören und/oder gerade nach einem bestimmten Packprogramm "passen". "Zyklisch" soll aber bedeuten, dass die Reihenfolge der Abnahme von Gepäckstücken im Übrigen immer die gleiche bleibt. Dies hat den Vorteil, dass ein Transportband ab dem Zeitpunkt, ab dem der Roboter kein Gepäckstück mehr von ihm abnimmt, eine kalkulierbare Mindestzeit zur Verfügung hat, bis der Roboter das nächste Mal bei diesem Transportband ein Gepäckstück abnimmt. Damit steht eine, je nach Zahl der parallel arbeitenden Transportbänder, relativ großzügige Zeit für den Antransport der nächsten passenden Gepäckstücke und/oder für die Aufnahme weiterer Gepäckstücke von dem anliefernden Gepäckband zur Verfügung.

Die Transportbänder sind vorteilhafterweise als Paternosterbänder aufgebaut, also so konstruiert, dass die Gepäckstücke an den Enden des Transportbandes an einer Umlenkstation aufrecht auf ein unteres Trum umgelenkt werden, Im Gegensatz zum Paternosteraufzug werden die erfindungsgemäßen Transportbänder im Regelfall langgestreckte horizontale Trume statt vertikaler Trume aufweisen. Hierdurch können die Gepäckstücke mit den Transportbändern in zwei Richtungen bewegt werden, um mehr Flexibilität zu erreichen. Das Transportband kann dann ohne Rücksicht auf "vor" dem gewünschten Gepäckstück stehende andere Gepäckstücke in der Richtung des jeweils kürzesten Weges zu der Abnahmestelle für den Roboter transportiert werden.

Bei einer Ausgestaltung der Erfindung werden die Gepäckstücke vermessen, und zwar bereits vor dem Einladen durch den Roboter. Damit kann der Roboter sich bereits auf die Gepäckstückgeometrie einstellen und kann vorzugsweise bereits ein Packplan erstellt werden, mit dem der Roboter den Gepäckbehälter besonders effizient und dicht packen kann. Dabei kann natürlich auch auf weitere Kriterien Rücksicht genommen werden, etwa auf das Vermeiden des Herabfallens hochliegender Gepäckstücke bei späteren Transportbewegungen des Gepäckbehälters oder auf eine weit untenliegende und damit durch das Gewicht darüberliegender Gepäckstücke belastete Anordnung eines "weichen" Gepäckstücks und dgl. Die Vermessung betrifft aber zumindest die geometrischen Daten der Gepäckstücke und erfolgt vorzugsweise auf dem jeweiligen Transportband des Gepäckstücks und nicht etwa bereits beim Einchecken. Letzteres wäre natürlich auch möglich, würde aber die Integration der Erfindung in bereits bestehende Flughafenanlagen erschweren. Wenn die erfindungsgemäße Anordnung parallel arbeitender Transportbänder mit den Roboter einschl der Gepäckvermessung an evtl. bereits bestehende Gepäckförderanlagen angeschlossen wird, ist diese Nachrüstung viel einfacher.

Der Roboter soll also bereits vor Ankunft des Gepäckstücks vorzugsweise die geometrischen Daten und möglicherweise auch die Konsistenz der Gepäckstücke kennen. Damit hat ein Packprogramm, das mit der Robotersteuerung zusammenarbeitet, Gelegenheit und Zeit zur Erstellung eines Gesamtpackplans.

Wenn die Gepäckstücke auf dem jeweiligen Transportband zumindest in gewisser Weise lagejustiert werden, so kann der Greifvorgang durch den Roboter hinsichtlich der Ansteuerungskomplexität vereinfacht werden. U. U. lassen sich durch eine standardisierte Orientierung auch Zeitgewinne erzielen. Zumindest soll dabei eine Ausrichtung insoweit vorgenommen werden, dass die Kanten des Gepäckstücks, falls vorhanden, auf Winkel von 0° oder 90° zu Referenzkanten eingestellt werden.

Der Transport durch die Transportbänder erfolgt vorzugsweise im Schrittbetrieb. Dieser Schrittbetrieb bezieht sich zum einen auf das Anfahren eines Gepäckstücks zu dem Aufnahmeplatz für den Roboter und dann Anhalten an dieser Stelle, als auch auf ein Anhalten leerer Plätze auf dem Transportband für das Beladen mit nachgelieferten Gepäckstücken. Das Aufladen und Abnehmen von Gepäckstücken soll also jeweils beim Stillstand des Bandes erfolgen. Die Bewegungen dazwischen können, wenn die Zwischenpositionen nicht benötigt werden, auch durchgängig sein und müssen nicht im Schrittbetrieb erfolgen. Die Schritte entsprechen also zumindest der Aufnahme eines Gepäckstücks durch den Roboter oder durch das Gepäckband, können allerdings auch in standardisierten Schrittweiten erfolgen, so dass auch Schritte ohne Aufnahme eines Gepäckstücks existieren.

Weiterhin ist bevorzugt, dass eine weitere Transporteinrichtung, etwa ein Förderband, vorgesehen ist, um von dem Roboter nicht aufgenommene Gepäckstücke, etwa Fehlzuordnungen oder nicht greifbare Gepäckstücke, oder nicht richtig gegriffene Gepäckstücke und daher nicht sicher gehaltene oder nicht sicher in den Gepäckbehälter einzuladende Gepäckstücke, oder vom Roboter nicht unterzubringende Gepäckstücke aufzunehmen. Dieses Förderband kann dazu dienen, herabfallende Gepäckstücke aufzunehmen und dem Roboter eine Möglichkeit zu bieten, solche Gepäckstücke abzulegen, ohne seine weitere Arbeit zu behindern. Es kann die Gepäckstücke wieder in einen früheren Schritt der Gepäck"verarbeitung" zurückbringen, also beispielsweise an den Anfang eines der Transportbänder oder sogar auf das gemeinsame Gepäckband, oder kann das Gepäckstück auch zur Aufnahme und zum Einladen durch eine menschliche Arbeitskraft bereithalten.

Der Roboter kann vorteilhafterweise mit einem Greifwerkzeug ausgestattet sein, das ein Greifarmpaar aufweist. Die Greifarme können beispielsweise an einem proximalen Ende gelagert sein und mit ihrem distalen Ende zum Greifen der Gepäckstücke ausgelegt sein. Dazu können nach innen gerichtete Abschnitte an den distalen Enden vorgesehen sein, die bei einem Fassen der Gepäckstücke von oben ein Untergreifen erlauben.

In diesem Zusammenhang ist darauf hinzuweisen, dass die Erfindung auch anwendbar ist, wenn die Gepäckstücke in Wannen, auf Tabletts oder in ähnlichen offenen Behältern transportiert werden. Sie können dann beispielsweise beim Ausschleusen von dem gemeinsamen Gepäckband zu den Transportbändern von diesen Wannen oder Tabletts befreit werden, oder auch bei der Aufnahme der Gepäckstücke durch den Roboter. Der Roboter kann dabei zunächst die Gepäckstücke mit diesen Wannen oder Tabletts oder auch nur die Gepäckstücke fassen, so dass die Wannen oder Tabletts durch den Roboter oder unabhängig von ihm bereits zuvor von dem Gepäckstück getrennt werden. Dann müssen jeweils Sammel- oder Rückführeinrichtungen für die Wannen oder Tabletts vorgesehen sein. Solche Wannen oder Tabletts bedeuten zwar einerseits einen zusätzlichen Aufwand, standardisieren aber bei der Gepäckförderung innerhalb der Gepäckanlage die Abmessungen und verhindern insbesondere Schwierigkeiten durch Ösen, Schlaufen, Gürtel oder Bänder an Gepäckstücken, die sich leicht verfangen können.

Vorzugsweise betrifft die Erfindung den Umgang mit Flugpassagiergepäck.

Die Transportbänder wiederum können Aussparungen in bestimmten Abständen aufweisen, die es den beschriebenen Greifarmen mit den nach innen gerichteten Abschnitten erleichtern, Gepäckstücke oder auch Wannen oder Tabletts mit Gepäckstücken zu untergreifen und abzuheben.

Die bereits erwähnte Vermessung der Gepäckstücke kann vorteilhafterweise mit einer Vorrichtung erfolgen, die zumindest einen Hebel aufweist. Dieser ist gelenkig gelagert, etwa an einem Proximalende, und an einem von dem Lager entfernten Ende, dem Distalende, zum Kontakt mit dem Gepäckstück ausgelegt. Durch eine Relativbewegung zwischen der Vorrichtung und dem Gepäckstück soll das Distalende an dem Gepäckstück entlangfahren, während der Hebel in Richtung auf das Gepäckstück kraftbeaufschlagt ist. Dadurch ergeben sich Auslenkungen des Hebels während des Entlangfahrens des Distalendes, die zumindest die geometrischen Maße des Gepäckstücks angeben.

Vorzugsweise erfolgt diese Kontaktmessung durch ein translatorisches Verschieben der Gepäckstücke, insbesondere ein Fahren auf einem der Transportbänder, entlang der in Ruhe befindlichen Vorrichtung. Der Hebel selbst ist dabei in Bewegung, sein Lager allerdings bleibt in Ruhe.

Der Hebel kann ein Rollelement aufweisen, insbesondere ein Rollband, das gegenüber Rädern oder Walzen wegen seiner größeren Kontaktfläche und seiner besseren Anpassbarkeit an Oberflächenkonturen bevorzugt ist. Damit kann der Hebel in Anlage an das Gepäckstück kommen, wobei das Band während des Entlangführens relativ zu der Gepäckstückoberfläche im Wesentlichen stationär bleibt. Das Band kann auch angetrieben sein und zum Weitertransport der Gepäckstücke dienen.

Zur Erfassung der horizontalen Maße des Gepäckstücks kann vorzugsweise ein Hebelpaar vorgesehen sein, das das Gepäckstück von entgegengesetzten Seiten aus greift oder "betastet". Zur Erfassung der vertikalen Maße kann vorzugsweise ein weiterer dritter Hebel über den Gepäckstücken vorgesehen sein, der dann relativ zu der Anlage an einer unter den Gepäckstücken verlaufenden Fördereinrichtung, etwa dem Transportband, arbeitet. Natürlich kann auch ein Hebelpaar für die vertikale Messung vorgesehen sein, etwa in einer Aussparung des Transportbandes unter den Gepäckstücken. Zusätzlich zu den geometrischen Maßen im Sinne der Maximalabmessungen können die Hebel auch die Kontur des Gepäckstücks erfassen, die dann in die Steuerung des Roboters bzw. seiner Greifeinrichtung und ggf. auch in die Optimierung des Packplans einbezogen werden kann. Darüber hinaus oder alternativ können Kraftmessungen der Hebel Angaben über die Konsistenz des Gepäckstücks liefern, also beispielsweise weiche Sporttaschen oder Rucksäcke von Hartschalenkoffern unterscheidbar machen.

Schließlich können die Lager des oder der Hebel zusätzlich zu der Lagerung der Schwenkbewegung um die durch sie definierte Drehachse auch selbst verschiebbar sein, und zwar im Wesentlichen senkrecht zur Relativbewegungsrichtung zwischen den Gepäckstücken und der Lagerachse sowie im Wesentlichen senkrecht zur Lagerachse selbst. Damit können die Hebel auf stark abweichende Gepäckstückgrößen Rücksicht nehmen, etwa indem sie mit ihrem Lager zunächst translatorisch angepasst werden, um dann den Hub der Schwenkbewegung für die eigentliche Messung auszunutzen.

Bei dieser Ausgestaltung können die Gepäckstücke auch von der Seite der Distalenden der Hebel aus eingeführt werden, wobei die Lager eher eng eingestellt sind. Das Gepäckstück drückt dann die etwas auseinandergespreizten Hebel auseinander und schiebt dann die Lager auseinander, um schließlich die Lager und die dort liegenden Proximalenden der Hebel zu passieren. Diese Variante ist im Ausführungsbeispiel näher dargestellt. Bei den zuvor beschriebenen Varianten, insbesondere denen ohne Querverschiebbarkeit der Lager, kann auch eine umgekehrte Transportrichtung der Gepäckstücke verwendet werden.

Im Folgenden wird die Erfindung anhand eines Ausführungsbeispiels näher erläutert, wobei die einzelnen Merkmale auch in anderen Kombinationen erfindungswesentlich sein können und sich, wie bereits erwähnt, implizit auf alle Kategorien der Erfindung beziehen.
- Figur 1: zeigt eine schematisierte Draufsicht auf eine erfindungsgemäße Anlage zum Einladen von Fluggepäckstücken.
- Figur 2: zeigt eine mit den erfindungsgemäßen Paternosterbändern kombinierte Gepäckstückvermesseinrichtung in Detaildarstellung, ebenfalls in Drauf- sicht und zu drei verschiedenen Zeitpunkten.
- Figur 3: zeigt eine Seitenansicht eines erfindungsgemäßen Patemosterbandes der Anlage aus Figur 1.
- Figur 4: zeigt zur Illustration des technischen Hintergrunds schematisch einen Fluggepäckbehälter aus Figur 1.

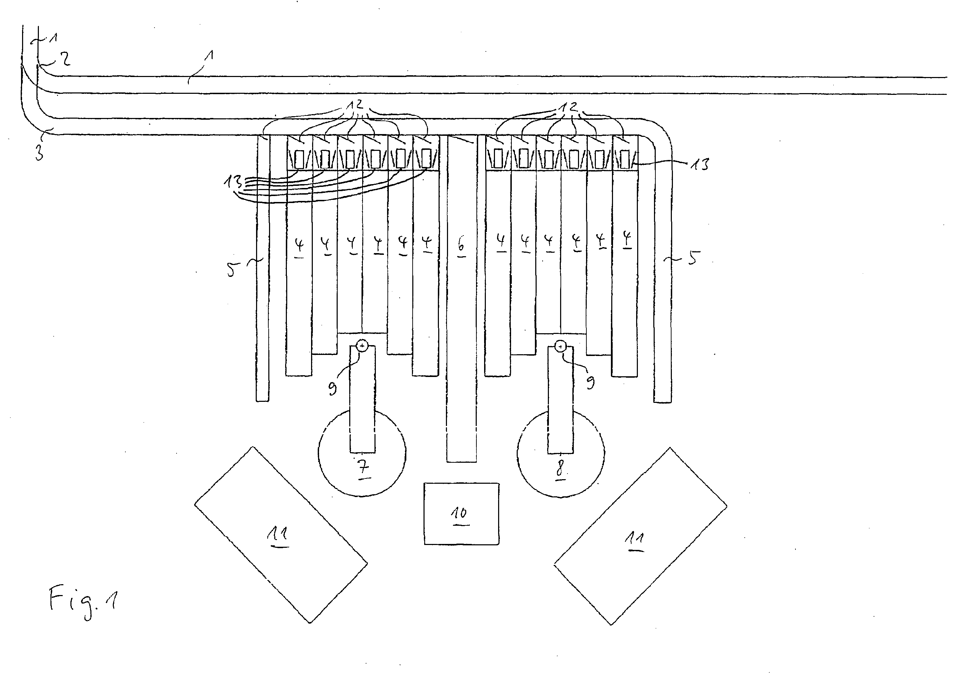

Figur 1 veranschaulicht eine erfindungsgemäße Anlage zum Einladen von Fluggepäck in einer schematisierte Draufsicht und illustriert damit auch das erfindungsgemäße Verfahren.

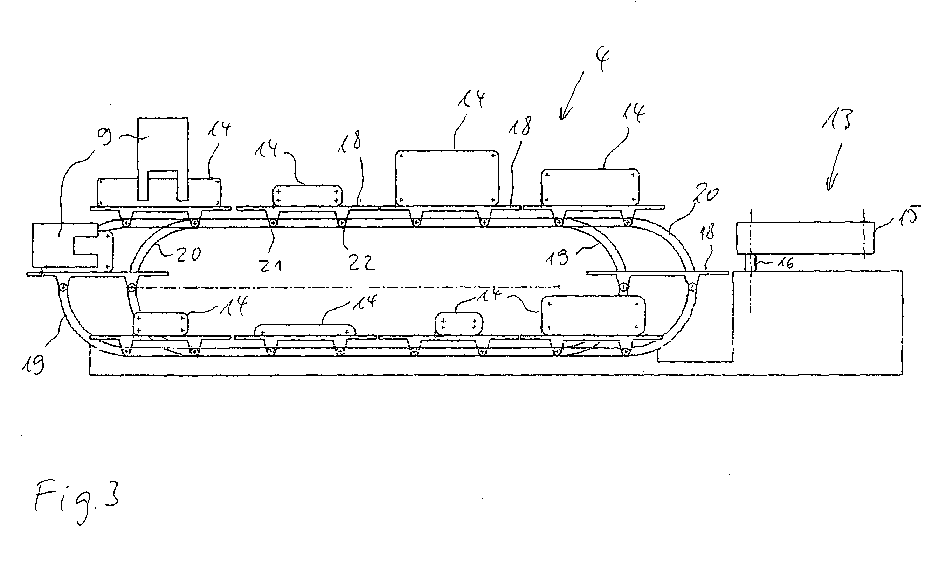

Das Fluggepäck wird von Passagieren an konventionellen Check-in-Schaltern aufgegeben, dort gewogen und Flugnummern zugeordnet und über konventionelle Gepäckbänder weitertransportiert. Es folgen Sicherheitsprüfungen, die hier nicht im Einzelnen dargestellt werden. Das Fluggepäck kommt dann in Form von ungeordnet nacheinander angelieferten einzeinen Gepäckstücken über ein Hauptgepäckband 1 im oberen linken Bereich der Figur 1 an. An einer ersten Hauptweiche 2 wird eine Sortierung nach Flugnummemzugehörigkeit vorgenommen. Die Daten hierzu liegen schon von den Check-in-Schaltem vor. Die Weiche 2 steht dabei stellvertretend für ein im Einzelfall komplexeres Weichensystem. Sie dient zum Ausschleusen der zu einer bestimmten Flugnummer gehörenden Gepäckstücke auf ein Nebengepäckband 3. Dieses führt an einem System parallel arbeitender Paternostertransportbänder 4 entlang, die weiter unten anhand Figur 3 näher erläutert werden. Dabei handelt es sich um insgesamt zwei Blöcke mit jeweils sechs parallelen Transportbändern 4, die jeweils senkrecht zu dem Nebengepäckband 3 laufen. Ferner zweigen in Transportrichtung gesehen vor und hinter den Transportbändern 4 Einfachbänder 5 zur manuellen Beladung ab, die für Sondergepäckstücke oder bei technischen Schwierigkeiten mit der Anlage verwendet werden können. Zwischen den beiden Blöcken der Paternostertransportbänder 4 existiert ferner ein Rückführband 6, auf das noch näher eingegangen wird.

Zwei baugleiche Roboter 7 und 8, hier um eine vertikale Achse drehbar aufgestellte Gelenkarmroboter mit einem distalen Greifwerkzeug 9, sind jeweils mittig zu den beiden Blöcken der Paternostertranspörtbänder 4 aufgestellt und können die jeweiligen Enden (in Figur 1 unten) der Paternostertransportbänder 4 erreichen. Die Roboter 7 und 8 werden gesteuert durch eine gemeinsame Systemsteuerung 10, die bei diesem Beispiel mittig zwischen den beiden Robotern 7 und 8 eingezeichnet ist und ein Programm zur Packoptimierung enthält. Die Roboter 7 und 8 dienen zum Greifen von Gepäckstücken von den Transportbändern 4 und Einladen in jeweils schräg unten rechts und links eingezeichnete Gepäckbehälter 11, bei denen es sich um konventionelle Gepäckwagen zum Transport zum Flugzeug (ramp cart), in das Flugzeug (mit dem eingeladenen Gepäck) einzuladende Fluggepäckbehälter konventioneller Bauart oder auch entsprechend den früheren Erläuterungen erfindungsgemäß ausgestaltete Fluggepäckbehälter handeln kann.

Am "Anfang", also in Figur 1 am oberen "Ende" der Transportbänder 4 sind in dem in Figur 1 linken Einfachgepäckband 5 jeweils individuell betätigbare Einzelweichen 12 vorgesehen, die zum Ausschleusen einzelner Fluggepäckstücke von dem Gepäckband 3 dienen. Beispielsweise könnte das Gepäckband 3 in diesem Bereich schräg geneigt verlaufen, wobei die Gepäckstücke in Anlage an eine Wand transportiert werden, und könnten die Einzelweichen 12 jeweils in Klappen in dieser Wand bestehen, die individuell und schnell geöffnet und geschlossen werden können. Die Einzelgepäckstücke fallen von dort auf eines der Bänder 4 und 5.

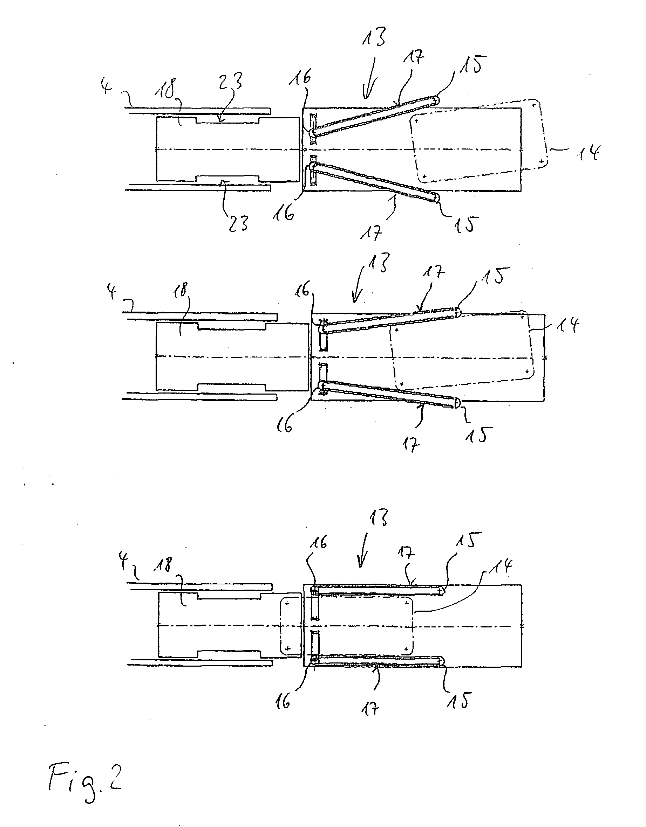

Diesen Einzelweichen 12 nachgeschaltet finden sich auf den Paternostertransportbändern 4 Vermesseinrichtungen für die Gepäckstücke, die hier summarisch mit 13 bezeichnet sind. Diese dienen zum geometrischen und konsistenzmäßigen Vermessen der Gepäckstücke und richten diese zentrisch auf den Transportbändern 4 aus. Weiter unten wird anhand Figur 2 näher auf diese Vermesseinrichtungen eingegangen.

Die an den Check-in-Schaltern aufgegebenen und gewogenen sowie dort den Flugnummern zugeordneten Gepäckstücke werden über das Gepäckband 3 zu der mit der betreffenden Flugnummer befassten Gepäckanlage aus Figur 1 transportiert. Dort werden die Gepäckstücke über die bereits beschriebenen Weichen 12 im Falle nicht verarbeitbarer Sondergepäckstücke auf das Einfachgepäckband 5 und ansonsten auf eines der Paternostertransportbänder 4 gelegt. Auf den Paternostertransportbändern 4 fahren die Gepäckstücke dann in eine in Figur 2 näher dargestellte Vermesseinrichtung.

Figur 2 zeigt in Draufsicht von oben nach unten drei aufeinander folgende Zeitpunkte, wobei das einzelne Gepäckstück 14 von rechts kommend nach links durchgefahren wird. In dem dargestellten Beispiel kann es sich um einen Hartschalenkoffer handeln.

Die Vermesseinrichtung 13 weist zwei spiegelbildlich zu der in Figur 2 horizontal liegenden Mittenachse angeordnete Hebel 15 auf, die jeweils über ein quer zur Transportrichtung des Gepäckstücks 14 verschiebbares Lager 16 gehalten sind. Die Querverschiebbarkeit der Lager 16 zeigt sich im Vergleich der drei Einzeldarstellungen in Figur 2.

Die Hebel weisen umlaufende Bänder 17 auf. Diese Bänder sind angetrieben und dienen von dem in der obersten Darstellung dargestellten Zeitpunkt, in dem die Bänder das Gepäckstück 14 gerade gegriffen haben, bis zu dem untersten Zeitpunkt, in dem das Gepäckstück 14 von den Bändern aus der Vermesseinrichtung 13 herausgeschoben wird, zum Gepäckstücktransport.

Man erkennt, dass die Lager 16 in der obersten Darstellung zunächst auf einen engen Abstand eingestellt sind und die Hebel 15 das Gepäckstücke 14 in einem auseinandergespreizten Zustand aufnehmen. Das Gepäckstück 14 liegt dabei etwas schief und wird nun durch eine symmetrisierte Bewegung der Hebel in ihren Lagern 16 und symmetrisierte Bewegung der Lager 16 hinsichtlich ihrer Querverschiebbarkeit einerseits ausgerichtet und andererseits mit zunehmender Anlage zwischen den Bändern 17 und dem Gepäckstück 14 in die Vermesseinrichtung 13 hineingezogen. Dabei laufen die Lager 16 bis zu dem notwendigen Abstand auseinander.

Ein weiterer Hebel prinzipiell gleicher Bauart liegt zwecks Vermessung der vertikalen Ausdehnung des Gepäckstücks 14 über der dargestellten Anordnung der beiden Hebel 15 und ist aus zeichnerischen Gründen nicht eingezeichnet. Er erlaubt eine Vermessung auch ohne Paargegenstück, weil das Gepäckstück 14 auf einer Transportplatte aufliegt, die eine Bezugsebene darstellt.

Die in Figur 2 dargestellte Vermesseinrichtung kann ferner durch ein auf die letzte dargestellte Situation folgendes Nach-Innen-Fahren der Lager 16 bei Einbuchtungen des Gepäckstücks 14 (nicht gezeigt) eine Konturerfassung und durch Kraftmessungen auch eine Konsistenzerfassung, etwa bei weichen Sporttaschen, zur Verfügung stellen. Diese Daten können bei der Optimierung der Planung des Einladens der Gepäckstücke durch den Roboter 7 bzw. 8 in den Gepäckbehälter 11 berücksichtigt werden.

In der an den letzten unten dargestellten Zeitpunkt anschließenden Phase wird das Gepäckstück 14 ausgeworfen auf einen links eingezeichneten Ablageplatz auf einer Platte des entsprechenden Paternostertransportbandes 4, die mit 18 bezeichnet ist. Auf die Aussparungen 23 wird weiter unten noch näher eingegangen.

Das Paternostertransportband 4 mit den Platten 18 ist in Figur 3 in weiteren Einzelheiten dargestellt.

Figur 3 zeigt in einer Seitenansicht ein Paternostertransportband 4 mit zwei Führungsschienen 19 und 20 für die Führung der jeweils linken bzw. rechten Tragepunkte 21 bzw. 22 der einzelner Platten 18 aus Figur 2. Die Führungsschienen erlauben einen synchronen Antrieb der Platten 18 in beiden Richtungen, so dass diese, wie Figur 3 veranschaulicht, in der Art eines Paternosters mit dauernd horizontaler Orientierung entlang der langgestreckten geschlossenen ovalen Bahn vor- und zurückbewegt werden können. Auf den Platten 18 sind verschiedene beispielhafte Gepäckstücke 14 eingezeichnet.

Die Vermesseinrichtung 13 aus Figur 2 ist im rechten Bereich nur angedeutet.

Das in Figur 1 nur schematisch dargestellte und mit 9 bezeichnete Greifwerkzeug der Roboter 7 und 8 ist in Figur 3 in zwei Positionen angedeutet. Es handelt sich hierbei um ein Paar im Sinne der Figur 3 von oben und von unten die Gepäckstücke 14 greifende Greifarme, die das im oberen Trum des Paternostertransportbandes 4 befindliche Gepäckstück 14 von oben und das im linken Umlenkbereich befindliche Gepäckstück von links, also von der Seite des Roboters aus, greifen. Beide Varianten sind möglich und je nach Form und Eigenart des Gepäckstücks zu wählen.

Ferner weisen die Greifarme des Greifwerkzeugs 9 nicht eingezeichnete, klappbare, nach innen, also zum jeweils gegenüberliegenden Greifarm, gerichtete Abschnitte zum Untergreifen der Gepäckstücke auf. Diese können in die Vertikale bzw. Horizontale, also bei der von oben greifenden Variante nach unten und bei der von links greifenden Variante nach rechts, geklappt werden, um das Greifen zu erleichtern. Bei dem Klappen kann auch eine etwas nach außen weisende Stellung gewählt werden. Sie dienen, insbesondere beim Greifen von oben, zum Untergreifen eines Gepäckstücks, eines Transporttabletts oder einer -wanne, auf die weiter oben bereits eingegangen wurde, auf denen das Gepäckstück ruht (nicht eingezeichnet). Die Platten 18 bzw. Aufnahmeplätze des Paternostertransportbands weisen in Figur 2 erkennbare seitliche Aussparungen zu diesem Zweck auf, die mit 23 bezeichnet sind.

Bei einer vereinfachten Ausführungsform mit unbeweglichen nach innen gerichteten Abschnitten an den Greifarmen könnte beim Von-Links-Greifen das Greifarmpaar soweit nach rechts bewegt werden, dass diese Abschnitte rechts vom Gepäckstück 14 positioniert werden und dabei nicht mehr stören. Wenn die Abschnitte klappbar sind, könnten Sie beim Von-Links-Greifen weggeklappt werden, um eine flächige Anlage zu gewährleisten.

Das Paternostertransportband 4 erlaubt durch die Möglichkeit der Vor- und Zurückbewegung eine flexible Zwischenpufferung und Aufnahme von nachgelieferten Gepäckstücken 14, etwa auf die leere Platte 18 im rechten Bereich der Figur 3. Daneben erlaubt das Paternostertransportband 4 eine wahlweise Präsentation des gerade passendsten Gepäckstücks 14 für die Abnahme durch den Roboter 7 oder 8, in Figur 3 im linken Bereich. Dabei kommt die Paternosterbauart vorteilhaft zum Tragen, indem eine beliebiges der Gepäckstücke 14 an die passende Stelle gefahren werden kann, ohne die übrigen Gepäckstücke umladen zu müssen.

Sollten einzelne Gepäckstücke 14 auf einem Paternostertransportband 4 für den Roboter 7 oder 8 nicht verwertbar sein, also gerade nicht in den Gepäckbehälter 11 passen oder von ihm nicht sicher einzuladen sein, so können sie auf dem Rückführband 6 abgelegt und über dieses in Figur 1 nach oben auf das Band 3 zurücktransportiert und über dieses wiederum zu dem Bandabschnitt 5 weitertransportiert werden. Dort kann sich dann eine menschliche Arbeitskraft einzelner Gepäckstücke 14 annehmen. Es sind natürlich auch (nicht gezeichnete) Ausführungsformen denkbar, bei denen zu dem Rückführband 6 analoge "Restebänder" unter den in Figur 1 unteren "Enden" der Paternostertransportbänder 4 laufen, um von dem Roboter 7 oder 8 oder dem Paternostertransportband 4 heruntergestoßene Gepäckstücke 14 aufzusammeln und weiterzutransportieren.

Das Paternostertransportband 4 dient damit zum einen als Zwischenpuffer zur Egalisierung des möglicherweise ungleichmäßigen Antransports der Gepäckstücke 14 durch das Gepäckband 1 bzw. 3. Dies gilt insbesondere in Anbetracht der bei diesem Beispiel zwölf parallel arbeitenden Paternostertransportbänder 4. Die Gepäckstücke werden dabei über die Einzelweichen 12 lediglich hinsichtlich der Optimierung der Pufferfunktion auf die verschiedenen Paternostertransportbänder 4 verteilt, also nicht nach weiteren Kriterien sortiert und insbesondere nicht auf unterschiedliche Robotertypen angepasst zugeordnet.

Andererseits erfüllen die Paternostertransportbänder 4 die Aufgabe einer im Hinblick auf die Packreihenfolge und -anordnung in dem Gepäckbehälter 11 optimierten Präsentation der jeweils von der zentralen Steuerung 10 für den Roboter 7 oder 8 angeforderten Gepäckstücke 14, in dem für den Roboter 7 oder 8 und dessen Greifwerkzeug 9 zugänglichen Bereich. Dabei werden die Paternostertransportbänder 4 von dem jeweiligen Roboter 7 oder 8 zyklisch abgearbeitet. Wenn allerdings bei einem Paternostertransportband zufällig zwei oder mehr benachbart gelagerte Gepäckstücke 14 "passen", so nimmt der Roboter 7 oder 8 diese nacheinander ab, bevor er zu dem in der zyklischen Reihenfolge nächsten Transportband 4 weiterschreitet. Demzufolge haben die Paternostertransportbänder 4 zwischen den einzelnen Abnahmevorgängen des Roboters 7 oder 8 jeweils im Verhältnis zu der Arbeitsfrequenz des Roboters 7 bzw. 8 relativ viel Zeit, um die nächsten passenden Gepäckstücke 14 nach vorne zu transportieren bzw. bei Bedarf an den Einzelweichen bzw. den Vermesseinrichtungen 13 nachfolgende Gepäckstücke 14 auf freigewordenen Platten 18 aufzunehmen.

Darüber hinaus können die beiden Blöcke aus jeweils sechs parallelen Paternostertransportbändern auch alternierend betrieben werden. Es kann also beispielsweise der Roboter 7 die gerade weitgehend vollgeladenen Paternostertransportbänder 4 des linken Blocks in den linken Gepäckbehälter 11 einladen, während der rechte Block aus den rechten sechs Paternostertransportbändern 4, der ganz oder im Wesentlichen leer ist, über das Gepäckband 3 beladen wird.

Auch können natürlich verschiedene Anpassungen an die Menge der über das Gepäckband 3 herantransportierten Gepäckstücke vorgenommen werden. Beispielsweise könnte bei einem gehäuften Anfall von Gepäckstücken der Betrieb der Paternostertransportbänder 4 eines der Blöcke oder beider Blöcke ganz auf die Aufnahme der zahlreichen Gepäckstücke ausgerichtet werden, wobei die Roboter 7 und 8 in ihrer Funktion untergeordnet berücksichtigt und in Pausen oder vorübergehend ganz außer Funktion gesetzt werden.

Schließlich könnte auch das Gepäckband 3 bei Bedarf als Zwischenpuffer dienen.

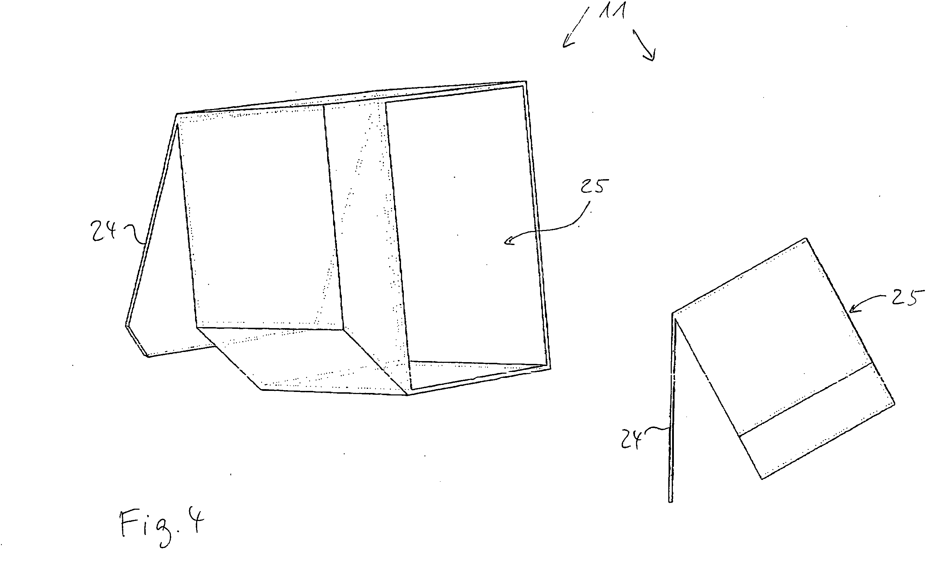

Figur 4 zeigt eine erfindungsgemäße Ausgestaltung des Fluggepäckbehälters 11 aus Figur 1. Die linke Darstellung ist perspektivisch, die rechte in Seitenansicht. Man erkennt, dass der Fluggepäckbehälter 11 in Figur 4 links eine von rechts vorne und hinten links fünfeckig und von den übrigen Seiten gesehen jeweils viereckig erscheinenden Form aufweist. Die fünfeckige Seitenansicht ergibt sich dabei durch ein hochkant stehendes Rechteck mit abgeschnittener Ecke (unten links von vorne rechts gesehen und unten rechts von hinten links gesehen). Die in Figur 4 nach rechts vorne weisende fünfeckige Frontfläche weist im rechten Bereich eine große Beladeöffnung 25 auf. Die Öffnung 25 kann im Übrigen schließbar sein, was in Figur 4 nicht dargestellt ist.

Wesentlich ist, dass erfindungsgemäß eine weitere Öffnung auf der entgegengesetzten Seite hinzugefügt wird, wobei bei diesem Beispiel die komplette Hinterwand aufklappbar ist. Dies ist durch die um einen Winkel weggeklappte eingezeichnete Platte 24 dargestellt. Die rechte Darstellung in Figur 4 zeigt eine Seitenansicht in Richtung der Klappachse, also der in Figur 4 von links oben hinten nach rechts oben hinten laufenden Kante. Die abgeklappte Seitenwand 24 wird durch die Schwerkraft abgeklappt und ragt gerade nach unten. Dabei dient also die untere Kante als Achse für das Verkippen des Fluggepäckbehälters 11. Es sind keine weiteren Lagervorrichtungen notwendig, sondern lediglich eine Vorrichtung, die den oberen Teil des Fluggepäckbehälters 11 "nach hinten" schiebt und kippt, woraufhin sich die zuvor aus einer Verriegelung gelöste Wand 24 von der oberen Kante abgesehen von dem Fluggepäckbehälter 11 löst und die gesamte Seitenfläche als Öffnung freigibt. In dieser Weise kann in dem Fluggepäckbehälter 11 befindliches Fluggepäck einfach ausgeschüttet werden und damit besonders schnell und effizient einem Weitertransport und der Gepäckausgabe zugeführt werden.

Dies kann in der in Figur 1 eingezeichneten Position geschehen, wobei dort nicht dargestellte Transporteinrichtungen für den Weitertransport der ausgekippten Gepäckstücke verwendet werden. Der Fluggepäckbehälter 11 steht dann gleich an der richtigen Stelle für das Beladen durch den Roboter 7 oder 8. Damit ist eine besonders ökonomische Kombination des Entladens von Fluggepäck aus dem Behälter 11 und des Neueinladens von neuem Gepäck durch die Öffnung 25 gegeben.

## Patentansprüche

1. Verfahren zum Einladen von Fluggepäckstücken (14) in ein Flugzeug, bei dem die Gepäckstücke (14) mit einer Mehrzahl parallel arbeitender Transportbänder (4) zu einem Roboter (7, 8) transportiert werden und von dem Roboter (7, 8) von der Mehrzahl Transportbänder (4) in einen Gepäckbehälter (11) eingeladen werden,
**dadurch gekennzeichnet, dass**
die Transportbänder (4) als Paternosterbänder aufgebaut sind und während des Transportierens der Gepäckstücke (14) zu dem Roboter (7, 8) mit zwei Bewegungsrichtungen betrieben werden.

2. Verfahren nach Anspruch 1, bei dem der Roboter (7, 8) Gepäckstücke (14) von den Transportbändern (4) in einer zyklischen Reihenfolge abnimmt.

3. Verfahren nach Anspruch 1 oder 2, bei dem die Gepäckstücke (14) auf dem jeweiligen Transportband (4) lagejustiert werden.

4. Verfahren nach einem der vorstehenden Ansprüche, bei dem die Mehrzahl Transportbänder (4) im Schrittbetrieb verfahren werden, wobei vorzugsweise jeder Schritt der Aufnahme eines Gepäckstücks (14) entspricht.

5. Verfahren nach einem der vorstehenden Ansprüche, bei dem eine weitere Transporteinrichtung (6) vorgesehen ist, die von dem Roboter (7, 8) nicht aufgenommene, nicht korrekt aufgenommene oder nicht unterzubringende Gepäckstücke (14) aufnehmen kann.

6. Verfahren nach einem der vorstehenden Ansprüche, bei dem der Gepäckbehälter (11) an dem Flugzeug selbst wieder entladen wird.

7. Verfahren nach einem der vorstehenden Ansprüche, bei dem der Roboter (7, 8) ein Greifwerkzeug (9) aufweist, das mit einem Greifarmpaar ausgestattet ist, wobei am distalen Ende jedes Greifarms ein nach innen gerichteter Abschnitt zum Untergreifen von Gepäckstücken (14) vorgesehen ist und die Transportbänder (4) Aussparungen (23) aufweisen, um das Untergreifen von Gepäckstücken (14) durch das Greifwerkzeug (9) des Roboters (7, 8) zu erleichtern.

8. Verfahren nach einem der vorstehenden Ansprüche, bei dem zum Erfassen der Maße eines Gepäckstücks (14) ein gelenkig gelagerter Hebel (15) mit seinem Distalende an dem Gepäckstück (14) entlang geführt wird, wobei der Hebel (15) im Sinn der gelenkig gelagerten Bewegung kraftbeaufschlagt ist und die Auslenkung des Hebels (15) während des Entlangführens an dem Gepäckstück (14) ausgewertet wird.

9. Verfahren nach Anspruch 8, bei dem der Hebel (15) ein Rollband (17), vorzugsweise ein angetriebenes Rollband (17), aufweist und das Rollband (17) während des Entlangführens in Anlage an das Gepäckstück (14) kommt und dabei relativ zu der Oberfläche des Gepäckstücks (14) im Wesentlichen in Ruhe bleibt.

10. Verfahren nach Anspruch 8 oder 9. bei dem der Hebel (15) zur Erfassung der horizontalen Maße des Gepäckstücks (14) paarweise und zur Erfassung der vertikalen Maße vorzugsweise ein weiteres drittes Mal vorgesehen ist, wobei die gelenkig gelagerten Bewegungen der Hebel (15) des Paares symmetrisch gekoppelt sind, um das Gepäckstück (14) mittig auszurichten.

11. Verfahren nach einem der Ansprüche 8 - 10, bei dem durch Kraftmessungen mit dem/den Hebel/n (15) die Konsistenz des Gepäckstücks (14) erfasst wird.

12. Verfahren nach einem der Ansprüche 8 - 11, bei dem der/die Hebel (15) mit seinem/ihrem Lager (16) im Wesentlichen senkrecht zu der Richtung des Entlangführens des Gepäckstücks (14) und im Wesentlichen senkrecht zu der Lagerachse verschiebbar gelagert ist/sind.

13. Anlage zum Einladen von Fluggepäckstücken (14) in einen Gepäckbehälter (11), welche Anlage ausgelegt ist für ein Verfahren nach einem der Ansprüche 1 - 7 und aufweist
eine Mehrzahl parallel arbeitender Transportbänder (4) zum Transportieren der Gepäckstücke (14) und
einen Roboter (7, 8) zum Einladen der von der Mehrzahl Transportbänder (4) antransportierten Gepäckstücke (14) in den Gepäckbehälter (11),
**dadurch gekennzeichnet, dass**
die Transportbänder (4) als Patemosterbänder aufgebaut und während des Transportierens der Gepäckstücke (14) zu dem Roboter (7, 8) mit zwei Bewegungsrichtungen betreibbar sind.

14. Anlage nach Anspruch 13 mit einer Gepäckstückvermesseinrichtung (13) mit einem gelenkig gelagerten Hebel (15), die für ein Verfahren nach einem der Ansprüche 8 - 12 ausgelegt ist und dazu, den Hebel (15) mit seinem Distalende an dem Gepäckstück (14) entlang zu führen, wobei der Hebel (15) im Sinn der gelenkig gelagerten Bewegung kraftbeaufschlagt ist und die Auslenkung des Hebels (15) während des Entlangführens des Gepäckstücks (14) ausgewertet wird.

## Claims

1. A method for loading flight luggage pieces (14) into an aircraft,
in which said luggage pieces (14) are conveyed by a plurality of parallely working conveying belts (4) to a robot (7, 8) and are loaded by said robot (7, 8) from said plurality of conveying belts (4) into a luggage container (14),
**characterized in that**
said conveying belts (4) are constructed as paternoster belts and are operated in two directions of movement while conveying said luggage pieces (14) to said robot (7, 8).

2. The method according to claim 1, in which said robot (7, 8) picks up luggage pieces (14) from said conveying belts (4) in a cyclic order.

3. The method according to claim 1 or 2, in which said luggage pieces (14) are position-adjusted on said respective conveying belt (4).

4. The method according to one of the previous claims, in which said plurality of conveying belts (4) are driven in a stepping mode, wherein preferably each step corresponds to the pick-up of a luggage piece (14).

5. The method according to one of the previous claims, in which an additional conveying device (6) is provided, which can receive the luggage pieces (14) being not picked up by said robot (7, 8), being not picked up correctly by said robot (7, 8), or being not storable.

6. The method according to one of the previous claims, in which said luggage container (11) is unloaded again at said aircraft itself.

7. The method according to one of the previous claims, in which said robot (7, 8) comprises a gripping device (9), which is equipped with a pair of gripping arms, wherein an inward pointing part at the distal end of each said gripping arm is provided for an under-gripping of said luggage pieces (14) and said conveying belts (4) comprise recesses (23) to facilitate said under-gripping of said luggage pieces (14) by said gripping device (9) of said robot (7, 8).

8. A method according to one of the preceding claims, in which, for detecting the measures of a luggage piece (14), a hinged lever is guided along said luggage piece with its distal end, wherein said lever (15) is subjected to a force in terms of the hinged movement and the displacement of said lever (15) is evaluated while guiding it along said luggage piece (14).

9. The method according to claim (8), in which said lever (15) comprises a rolling-belt (17), preferably a driven rolling-belt (17), and said rolling-beit (17) contacts said luggage piece (14) during said guiding along and stays substantially at rest with respect to the surface of the luggage piece (14) therein.

10. The method according to claim 8 or 9, in which said lever (15) is provided as a pair for detecting the horizontal measures of said luggage piece (14) and is preferably provided a third time for detecting the vertical measures.

11. The method according to one of claims 8 - 10, in which the consistency of said luggage piece (14) is detected by a force measurement with said lever/levers (15).

12. The method according to one of claims 8 - 11, in which said lever/levers (15) is/are mounted with its/their hinge (16) substantially perpendicular to the direction of the guiding along of said luggage piece (14) and said lever/levers is/are hinged slidably substantially perpendicular to the hinge axis.

13. An apparatus tor loading of luggage pieces (14) into a luggage container (11), which apparatus is adapted to a method of one of claims 1 - 7 and comprises
a plurality of parallely working conveying belts (4) for conveying said luggage pieces (14) and
a robot (7, 8) for loading said luggage pieces (14) being delivered by said plurality of conveying belts (4) into said luggage container (11),
**characterized in that**
said conveying belts (4) are constructed as paternoster belts and are operable in two directions of movement while conveying said luggage pieces (14) to said robot (7, 8).

14. The apparatus of claim 13 comprising a luggage piece measurement device (13) with a hinged lever (15), which is designed for a method according to one of claims 8 - 12 and for guiding said lever (15) with its distal end along said luggage piece (14), wherein said lever (15) is subjected to a force in terms of the hinged movement and the displacement of said lever (15) is evaluated while guiding it along said luggage piece (14).

## Revendications

1. Procédé pour charger des pièces de bagages aériens (14) dans un avion dans lequel les pièces de bagages (14) sont transportés vers un robot (7, 8) avec une multitude de bandes transporteuses (4) qui fonctionnent en parallèle, et sont chargés par le robot (7, 8) dans un conteneur à bagages (11) de la multitude de bandes transporteuses (4),
**caractérisé en ce**
**que** les bandes transporteuses (4) sont constituées comme des bandes de type paternoster et marchent pendant le transport des bagages (14) vers le robot (7, 8) avec deux sens de mouvement.

2. Procédé selon la revendication 1 dans lequel le robot (7, 8) prend des pièces de bagages (14) des bandes transporteuses (4) dans un ordre cyclique.

3. Procédé selon la revendication 1 ou 2 dans lequel les pièces de bagages (14) sont ajustés en position sur la bande transporteuse respective (4).

4. Procédé selon l'une des revendications précédentes dans lequel la multitude de bandes transporteuses (4) se déplace en mode pas à pas, chaque pas correspondant de préférence à la réception d'un pièce de bagages (14).

5. Procédé selon l'une des revendications précédentes dans lequel un autre dispositif de transport (5) est prévu qui peut réceptionner des pièces de bagages (14) qui n'ont pas été réceptionnés, qui n'ont pas été réceptionnés correctement par le robot (7, 8) ou qui ne peuvent pas être casés.

6. Procédé selon l'une des revendications précédentes dans lequel le conteneur à bagages (11) est déchargé de nouveau sur l'avion lui-même.

7. Procédé selon l'une des revendications précédentes dans lequel le robot (7, 8) présente un outil de préhension (9) qui est équipé d'une paire de bras de préhension, une section orientée vers l'intérieur étant prévue à l'extrémité distale de chaque bras de préhension pour saisir des pièces de bagages (14) par en dessous et les bandes transporteuses (4) présentant des évidements (23) pour faciliter la saisie des pièces de bagages (14) par en dessous par l'outil de préhension (9) du robot (7, 8).

8. Procédé selon l'une des revendications précédentes dans lequel un levier articulé (15) est guidé avec son extrémité distale le long d'un piéce de bagages (14) pour détecter les dimensions du pièce de bagages (14), le levier (15) étant chargé d'une force dans le sens du mouvement articulé et l'excursion du levier (15) étant évaluée pendant le guidage le long du pièce de bagages (14).

9. Procédé selon la revendication 8 dans lequel le levier (15) présente une bande roulement (17), de préférence une bande de roulement entraînée (17), et la bande de roulement (17) vient, pendant le guidage tout le long, en appui contre le pièce de bagages (14) et reste alors substantiellement en repos par rapport à la surface du pièce de bagages (14).

10. Procédé selon la revendication 8 ou 9 dans lequel le levier (15) est prévu par paires pour la détection des dimensions horizontales du pièce de bagages (14) et, de préférence, une troisième fois supplémentaire pour la détection des dimensions verticales, les mouvements articulés des leviers (15) de la paire étant couplés de manière symétrique pour aligner le pièce de bagages (14) de manière centrée.

11. Procédé selon l'une des revendications 8 à 10 dans lequel la consistance du pièce de bagages (14) est détectée par des mesures de force avec le(s) levier(s) (15).

12. Procédé selon l'une des revendications 8 à 11 dans lequel le(s) levier(s) (15) est(sont) logè(s) déplaçable(s) substantiellement perpendiculairement au sens du guidage le long du pièce de bagages (14) et substantiellement perpendiculairement à l'axe d'appui, par le biais de son/leurs coussinets (16).

13. Installation pour le chargement des pièces de bagages aériens (14) dans un conteneur à bagages (11), laquelle installation est conçue pour un procédé selon l'une des revendications 1 à 7 et présente une multitude de bandes transporteuses (4) qui fonctionnent en parallèle pour le transport les pièces de bagages (14) et
un robot (7, 8) pour charger les pièces de bagages (14), qui sont amenés par la multitude de bandes transporteuses (4), dans le conteneur à bagages (11).
**caractérisé en ce**
**que** les bandes transporteuses (4) sont constituées comme des bandes de type paternoster et peuvent fonctionner pendant le transport des pièces de bagages (14) vers le robot (7, 8) avec deux sens de mouvement.

14. Installation selon la revendication 13 avec un dispositif de mesurage des pièces de bagages (13) avec un levier articulé (15) qui est conçu pour un procédé selon l'une des revendications 8 à 12 et pour guider le levier (15) avec son extrémité distale le long du pièce de bagages (14), le levier (15) étant chargé d'une force dans le sens du mouvement articulé et l'excursion du levier (15) étant évaluée pendant le guidage le long du pièce de bagages (14).
